# EUROPEAN PATENT SPECIFICATION

(11) **EP 2 160 873 B1**
(45) Date of publication and mention of the grant of the patent: **12.06.2013**
(21) Application number: 08736838.7
(22) Date of filing: 15.04.2008
(51) Int. Cl.: H04L 12/851, H04L 12/801

(54) **QUALITY OF SERVICE SIGNALING**
DIENSTGÜTESIGNALISIERUNG
SIGNALISATION DE QUALITÉ DE SERVICE

(30) Priority: 17.04.2007 FI 20075260
(43) Date of publication of application: 10.03.2010
(73) Proprietor: TeliaSonera AB, 106 63 Stockholm (SE)
(72) Inventor: KORHONEN, Jouni, FI-11100 Riihimäki (FI)
(74) Representative: Holmström, Stefan Mikael
(86) International application number: PCT/FI2008/050189
(87) International publication number: WO 2008/125736

(56) References cited:
- WO-A1-99/48310
- WO-A2-2004/059923
- US-A1- 2003 039 210
- US-A1- 2007 076 599
- US-B1- 6 658 003
- US-B1- 7 136 382
- FINEBERG V: "A PRACTICAL ARCHITECTURE FOR IMPLEMENTING END-TO-END QOS IN AN IP NETWORK", IEEE COMMUNICATIONS MAGAZINE, IEEE SERVICE CENTER, PISCATAWAY, US, vol. 40, no. 1, 1 January 2002 (2002-01-01), pages 122-130, XP001102587, ISSN: 0163-6804, DOI: 10.1109/35.978059
- KENT K SEO BBN TECHNOLOGIES S: "Security Architecture for the Internet Protocol; rfc4301.txt", 20051201, 1 December 2005 (2005-12-01), XP015043220, ISSN: 0000-0003
- FINEBERG V.: 'A Practical Architecture for Implementing End-to-End QoS in an IP Network' IEEE COMMUNICATIONS MAGAZINE, IEEE SERVICE CENTER, PISCATAWAY, US January 2002, pages 122 - 130, XP001102587

## Description

### BACKGROUND OF THE INVENTION

### 1. Field of the Invention

This invention relates to QoS (Quality Of Service) signaling between nodes in a communication network, and in particularly to a new way of carrying out such signaling.

### 2. Description of Prior Art

QoS signaling is typically carried out in packet-switched networks, for instance, in order to provide different priorities to different users or data flows, or to guarantee a dataflow a certain level of performance. Prior art solutions implement QoS signaling between network nodes as signaling during, after or before signaling carried out for other purposes, such as signaling relating to security, for instance. As the available bandwidth between nodes is typically restricted, a continuous need exists to optimize the use of the available bandwidth in such a way that as much of the bandwidth as possible can be used for transmitting payload data. Therefore, a drawback with the prior art QoS signaling is that it consumes bandwidth.

Previously there is known from Finberg V, "A practical architecture for implementin end-to-end QOS in an IP network", IEEE Communications magazine, IEEE service center, Piscataway, US, Vol. 40, no. 1, 1 January 2002, pages 122-130 a solution where SPI information is used for classification by WAN routers when implementin end-to-end QoS in an IP Network.

Additionally, the reference Kent K Seo BBN technologies S: "Security Architecture for the Internet Protocol; rfc4301.txt", 20051201, 1 December 2005 discloses an IPSEC security standard.

### SUMMARY OF THE INVENTION

An object of the present invention is to solve the above mentioned drawback and provide a new way of implementing QoS signaling. This object is achieved with a method as defined in independent claim 1 and a node as defined in independent claim 3.

The invention is based on the idea of incorporating QoS signaling into the transmission of security related information. Thus, a situation in which a separate bandwidth is reserved in order to transmit QoS information between nodes of a packet-switched network can be avoided. Instead, an available bandwidth already reserved for transmitting security related information can be utilized also for QoS signaling. Such a solution makes it possible to save the available bandwidth for other purposes.

Preferred embodiments of the method and node of the invention are disclosed in the attached dependent claims.

### BRIEF DESCRIPTION OF DRAWINGS

In the following, the present invention will be described in closer detail by way of example and with reference to the attached drawings, in which
Figure 1 is a flow diagram of an embodiment of the invention,
Figure 2. illustrates two nodes according to an embodiment of the invention, and
Figure 3 illustrates an Authentication Header which can be utilized in an embodiment of the invention.

### DESCRIPTION OF AT LEAST ONE EMBODIMENT

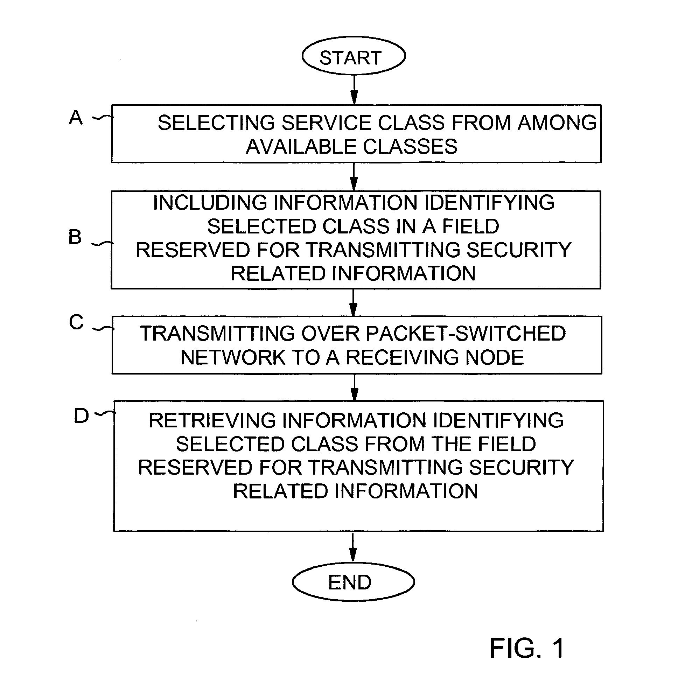

Figure 1 is a flow diagram of an embodiment of the invention. The embodiment illustrated can be utilized in a packet-switched network where the protocol used is IKEv1 (Internet Key Exchange), IKEv2 (Internet Key Exchange), Mobile IPv4 (Internet Protocol) or Mobile IPv6 (Internet Protocol), for instance.

In block A it is assumed that predetermined service classes have been defined in order to make it possible to select a desired QoS for a dataflow. Qos (Quality of Service) refers to control mechanisms that can provide different priorities to different users or data flows, or guarantee a dataflow a certain level of performance in accordance with requests from an application program. Several alternative prior art solutions exist for controlling traffic in a network in order to obtain a desired QoS for the different data flows, and also several alternative ways of defining QoS classes. In the following, it will by way of example be assumed that seven predetermined QoS classes have been defined such that class 1 means the best available QoS and class 7 means the worst available QoS.

In block A, a service class is selected for a dataflow from among the available seven classes. In the following example it will be assumed that service class 2 is selected.

In block B, information identifying the selected class is included in a field reserved for transmitting security related information. One alternative is to utilize a field reserved for a Security Parameter Index (SPI). An SPI is a pointer that refers to a session key and an algorithm used to ensure a secure data connection between two nodes. A sending node uses the SPI to identify and select the Security Association (SA) to be used for securing a packet. An SA may include cryptographic keys, initialization vectors or digital certificates. A receiving node uses the SPI to identify and select the encryption algorithm and key to be used for decrypting a received packet.

An alternative is to have predetermined values of the SPI reserved for QoS signaling via standardization, for instance. In such a case, seven SPI values can be reserved for this purpose, starting from value N+1 and ending with value N+7. In this case, the value of N is selected in such a way that a conflict with SPI values already previously reserved for other purposes is avoided. For instance, SPI values 1 to 255 are reserved for other purposes in Mobile IP, which means that N has to be 255 or greater to avoid a conflict with these reserved values. In this example, a selection of service class 2 therefore means that the SPI value N+2 is included as the information identifying a selected class.

Another alternative is to utilize dynamically allocated SPI values for QoS signaling. In such a case, the nodes participating in the communication utilize a predetermined algorithm to determine the SPI values used for QoS signaling. One alternative is to utilize a Hash function (such as SHA1, Secure Hashing Algorithm) or a random function (such as PRF, Pseudo Random Function, of NIST, National Institute of Standards and Technology) in connection with a predetermined input, such as a subscriber identity or a service identifier. In this connection, the input should be unique to the participating nodes. In this way, the previously mentioned number N can be generated with the function utilizing the input (N = get_nn_bits(function(input))). The best QoS class 1 is allocated the value N+1 and the worst available service class is allocated the value N+7.

In order to ensure that the dynamically allocated QoS values do not conflict with SPI values which have been previously reserved for other purposes, the utilized algorithm can be arranged to recalculate N in a predetermined way if a conflict occurs. Such a recalculation can be carried out by continuously increasing the value of N with one (N=N+1) until a conflict is avoided for all values N+1...N+7, by recalculating N with an alternative function, or by recalculating N with an alternative input (subscriber identifier, service identifier, etc.). Naturally in order to function properly, both nodes participating in the communication need to implement the same algorithm with the same input when they carry out the calculations and recalculations to determine the SPI values dynamically allocated to the QoS values for the datastream in question.

In block C, the packet including the field containing the information identifying the selected QoS class is transmitted from the transmitting node to the receiving node via the packet-switched network.

In block D, information identifying the selected class is retrieved from the field reserved for security related information. In an implementation where predetermined values of the SPI are reserved for QoS signaling, the value itself directly indicates the QoS class for the receiving node. In the above example, the value N+2 indicates the service class 2 to the receiving node. If, however, dynamically allocated SPI values are used to indicate the QoS class, the receiving node needs to carry out the calculation explained in connection with block B in order to first determine the value of N, and after this the receiving node is able to determine that the retrieved value N+2 indicates service class 2.

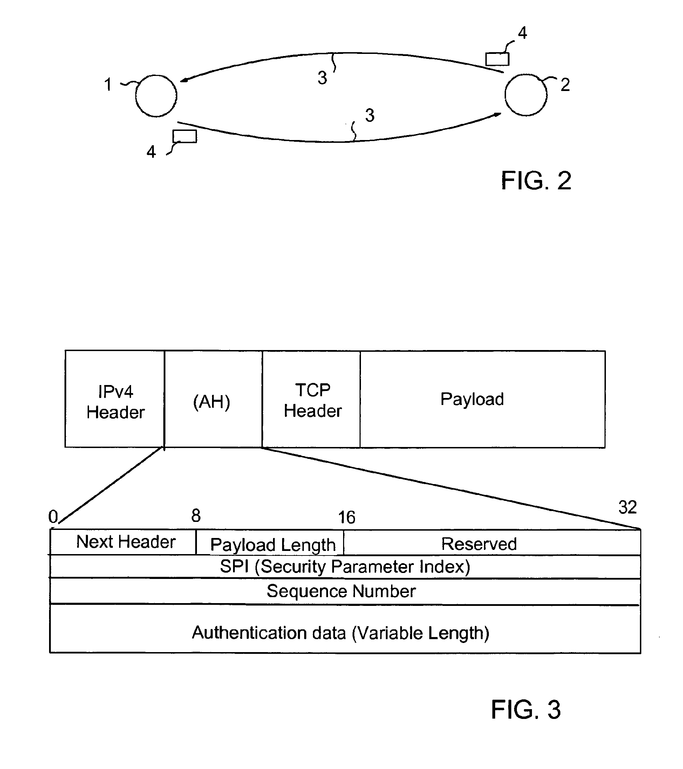

Figure 2 illustrates two nodes according to an embodiment of the invention. Nodes 1 and 2, such as a host and a gateway, communicate with each other over a packet-switched communication network 3.

The nodes 1 and 2 can communicate with each other via a wired or wireless connection. One alternative is that the node 1 is a mobile station, such as a mobile station communicating via a WLAN connection (Wireless Local Area Network), and that the node 2 is a Home Agent, in other words a router on a mobile stations home network that maintains information about the current location of the mobile station. Other nodes arranged in the network 3 between the nodes 1 and 2 may participate in transmitting the packets 4 between the nodes 1 and 2. One example of such a participating node is a base station handling the traffic over the radio interface with node 1.

Nodes 1 and 2 correspond to prior art nodes, however, they have been programmed to implement QoS signaling as has been explained in connection with Figure 1.

According to the present invention, a simple negotiation about the QoS class for packets transmitted from node 1 to node 2 can be implemented. In such a case, node 1 is configured to include information indicating a selected QoS service class in packets 4 transmitted to node 2, as has been explained in connection with Figure 1. However, if node 2 determines that the selected QoS class is not appropriate, it includes information indicating which service class node 2 determines to be an appropriate service class in the packets 4 transmitted from node 2 to node 1. In that case, node 1 is configured to be responsive to the service class indicated in the packets received from node 2, in which case it starts to implement the service class indicated by the packets received from node 2.

Figure 3 illustrates an Authentication Header which can be utilized in an embodiment of the invention. An Authentication Header (AH) contains a 32 bit field for a Security Parameter Index (SPI), which according to the present invention can be utilized for QoS signaling, as has been explained in connection with Figure 1. As the SPI is widely available, also lover levels (such as wireless radio) can retrieve the information indicating the selected QoS class and utilize it when controlling data flows.

It is to be understood that the above description and the accompanying figures are only intended to illustrate the present invention. It will be obvious to those skilled in the art that the invention can be varied and modified also in other ways without departing from the scope of the invention.

## Claims

1. A method of implementing quality of service signaling in a packet-switched communication system (3), comprising
selecting (A) a quality of service class from among a set of predetermined available classes,
including (B) information identifying the selected class in a field of a packet (4), which field is reserved for transmitting security related information, which refers to a session key and an algorithm used between nodes, and
transmitting (C) said packet (4) over the packet-switched communication system (3), **characterized in that**
said method comprises
calculating a value indicating the selected class by utilizing a predetermined algorithm and predetermined parameters,
comparing said calculated value with predetermined reserved values which are reserved for other purposes, and
re-calculating said calculated value in a predetermined way prior to including (B) said value as said information indicating the selected class, until said calculated value corresponds with no one of said reserved values.

2. A method according to claim 1, **characterized in that** said field reserved for transmitting security related information is a field reserved for a Security Parameter Index.

3. A node (1) for a packet-switched network, said node being configured to
include information indicating a selected quality of service class in a field of a packet (4), which field is reserved for transmitting security related information, which refers to a session key and an algorithm used between nodes, and
transmit said packet (4) via said packet-switched network (3) to another node (2), **characterized in that** said node is configured to
calculate a value indicating the selected class by utilizing a predetermined algorithm and predetermined parameters,
compare said calculated value with predetermined reserved values which are reserved for other purposes, and
re-calculate said calculated value in a predetermined way prior to including said value as said information indicating the selected class, until said calculated value corresponds with no one of said reserved values.

4. A node (1) according to claim 3, **characterized in that** said field reserved for transmitting security related information is a field reserved for a Security Parameter Index.

## Patentansprüche

1. Ein Verfahren zum Durchführen einer Dienstgütesignalisierung in einem paketvermittelten Kommunikationssystem (3), das Folgendes aufweist
eine Dienstgüteklasse aus einem Satz von im Voraus bestimmten verfügbaren Klassen wählen (A),
Information, die die gewählte Klasse in einem Feld eines Pakets (4) identifiziert, einschließen (B), welches Feld für Vermittlung sicherheitsbezogener Information reserviert ist, die einen zwischen Knoten verwendeten Sitzungsschlüssel und einen zwischen Knoten verwendeten Algorithmus betrifft, und
das besagte Paket (4) über das paketvermittelte Kommunikationssystem (3) übermitteln (C), **dadurch gekennzeichnet, dass** das besagte Verfahren Folgendes aufweist
einen die gewählte Klasse anzeigenden Wert berechnen, indem ein im Voraus bestimmter Algorithmus und im Voraus bestimmte Parameter verwendet werden,
den besagten berechneten Wert mit im Voraus bestimmten reservierten Werten vergleichen, die für andere Zwecke reserviert sind, und
den besagten berechneten Wert in einer im Voraus bestimmten Weise neu berechnen bevor der besagte Wert als besagte, die gewählte Klasse anzeigende Information eingeschlossen wird (B), bis der besagte berechnete Wert keinem der besagten reservierten Werte entspricht.

2. Ein Verfahren gemäß dem Patentanspruch 1, **dadurch gekennzeichnet, dass** das für Vermittlung sicherheitsbezogener Information reservierte Feld ein für einen Sicherheits-Parameter-Index reserviertes Feld ist.

3. Ein Knoten (1) für ein paketvermitteltes Netzwerk, wobei der besagte Knoten konfiguriert ist,
eine gewählte Dienstgüte anzeigende Information in ein Feld eines Pakets (4) einschließen, welches Feld für Vermittlung sicherheitsbezogener Information reserviert ist, die einen zwischen Knoten verwendeten Sitzungsschlüssel und einen zwischen Knoten verwendeten Algorithmus betrifft, und
das besagte Paket (4) über das besagte paketvermittelte Netzwerk (3) an einen anderen Knoten (2) vermitteln, **dadurch gekennzeichnet, dass** der besagte Knoten konfiguriert ist, einen, die gewählte Klasse anzeigenden Wert zu berechnen, indem ein im Voraus bestimmter Algorithmus und im Voraus bestimmte Parameter verwendet werden,
den besagten berechneten Wert mit im Voraus reservierten Werten vergleichen, die für andere Zwecke reserviert sind, und
den besagten berechneten in einer im Voraus bestimmten Weise neu berechnen bevor der besagte Wert als besagte, die gewählte Klasse anzeigende Information eingeschlossen wird (B), bis der besagte berechnete Wert keinem der besagten reservierten Werte entspricht.

4. Ein Knoten (1) gemäß dem Patentanspruch 3, **dadurch gekennzeichnet, dass** das besagte für Vermittlung sicherheitsbezogener Information reservierte Feld ein für einen Sicherheits-Parameter-Index reserviertes Feld ist.

## Revendications

1. Méthode pour implémenter un signalement de qualité de service dans un système de communication à commutation de paquets (3), comprenant de
sélectionner (A) une classe de qualité de service parmi un ensemble de classes disponibles prédéterminées
inclure (B) une information identifiant la classe sélectionnée dans un champ d'un paquet (4), ledit champ étant réservé pour transmettre une information relative à la sécurité qui se réfère à une clé de session et à un algorithme utilisé entre des noeuds, et
transmettre (C) ledit paquet (4) sur le système de communication à commutation de paquets (3),
**caractérisée en ce que** ladite méthode comprend de
calculer une valeur indiquant la classe sélectionnée en utilisant un algorithme prédéterminé et des paramètres prédéterminés,
comparer ladite valeur calculée avec des valeurs réservées prédéterminées qui sont réservées pour d'autres buts, et
recalculer ladite valeur calculée dans une manière prédéterminée avant d'inclure (B) ladite valeur en tant qu'information indiquant la classe sélectionnée, jusqu'à ce que ladite valeur calculée corresponde avec aucune desdites valeurs réservées.

2. Méthode selon la revendication 1, **caractérisée en ce que** ledit champ réservé pour transmettre une information relative à la sécurité est un champ réservé pour un index de paramètre de sécurité.

3. Noeud (1) pour un réseau à commutation de paquets, ledit noeud étant configuré pour
inclure une information indiquant une classe de qualité de service sélectionnée dans un champ d'un paquet (4), ledit champ étant réservé pour transmettre une information relative à la sécurité qui se réfère à une clé de session et à un algorithme utilisé entre des noeuds, et
transmettre ledit paquet (4) via ledit réseau à commutation de paquets (3) à un autre noeud (2),
**caractérisé en ce que** ledit noeud est configuré pour
calculer une valeur indiquant la classe sélectionnée en utilisant un algorithme prédéterminé et des paramètres prédéterminés,
comparer ladite valeur calculée avec des valeurs réservées prédéterminées qui sont réservées pour d'autres buts, et
recalculer ladite valeur calculée dans une manière prédéterminée avant d'inclure ladite valeur en tant qu'information indiquant la classe sélectionnée, jusqu'à ce que ladite valeur calculée corresponde avec aucune desdites valeurs réservées.

4. Noeud (1) selon la revendication 3, **caractérisé en ce que** ledit champ réservé pour transmettre une information relative à la sécurité est un champ réservé pour un index de paramètre de sécurité.
